# EUROPEAN PATENT SPECIFICATION

(11) **EP 0 603 599 B1**
(45) Date of publication and mention of the grant of the patent: **30.07.1997**
(21) Application number: 93119380.9
(22) Date of filing: 01.12.1993
(51) Int. Cl.: F16J 15/32

(54) **Seal device**
Abdichtvorrichtung
Dispositif d'étanchéité

(30) Priority: 23.12.1992 US 995483
(43) Date of publication of application: 29.06.1994
(73) Proprietor: SIEMENS ELECTRIC LIMITED, Chatham, Ontario N7M 5M7 (CA)
(72) Inventor: Kershaw, Peter A., London, Ontario N6K 1S4 (CA)
(74) Representative: Fuchs, Franz-Josef, Dr.-Ing.

(56) References cited:
- EP-A- 0 230 738
- EP-A- 0 352 608
- GB-A- 396 240
- US-A- 3 203 740
- US-A- 4 099 731
- US-A- 4 383 694
- US-A- 4 793 242

## Description

This invention relates to sealing devices in general and more particularly to sealing devices wherein the pressure differential across the seal device is very small.

### Background of the Invention

The world is full of sealing devices for use in applications wherein the sealing device functions to seal a bearing from the influx of dirt and grime to retain lubrications such as found in U.S. patent 3,203,740. Another sealing device typically used is an "o" ring seal which is used to maintain the pressure and fluid on one side of the seal from "leaking" to the other side of seal such as is found in the assembly of fuel injectors to internal combustion engines.

Seals are used to rotate around a housing member such as found in U.S. patent 4,099,731 wherein the seal rotates with a roll, as in a rolling mill. Seals are used as packing materials in applications wherein the water or fluid under pressure is to remain on the one side of the seal and not "leak" through to the other side. Seals are used to occupy the space between mating parts to accept normal manufacturing tolerances on such mating parts; an example of such a seal is U.S. patent 4,383,694.

Seals are made from polytetrafluoroethylene (PTFE) material to function as gaskets. An example of such a PTFE seal is found in EP A2 0 352 608. In each of these types of seals, the pressure differential across the seal is typically high and as such the devices have hard external surfaces and are slightly deformable in order to mate in tight places.

Both US 4 793 242 and EPA 0 230 738 show, according to the features of the first part of claim 1, seal devices for sealing a shaft extending through a frame and having a negligible to a small pressure difference across the seal device, the seal device having a central axis and comprising: a tubular housing member enclosed at one axial end and having means at the other axial end providing for associating the tubular housing member with a frame; the tubular walled housing member comprising a central aperture in the one axial end, the central aperture having a size that allows passage of such a shaft therethrough; a flexible elastomer washer member having a predetermined axial thickness and a predetermined outer periphery, the elastomer washer member comprising a central aperture having a diameter smaller than the diameter of such a shaft, the washer member being received inside the housing member; the housing member comprising a pocket surrounding the central aperture in the one axial end of the housing member for receiving the washer member; a resilient retaining member having an outer periphery which is nominally greater than the inner periphery of the wall of the tubular walled housing member and comprising a central aperture that has a diameter larger than the diameter of such a shaft; the outer periphery of the retaining member comprising a plurality of circumferentially spaced apart tang members, the retaining member retaining and sealing the elastomer washer member in the pocket and the tang members forming an interference fit with the inner periphery of the wall of the tubular walled housing member for securing and sealing the elastomer washer member in the housing member, while the central aperture of the washer member provides peripheral sealing to such a shaft extending therethrough.

### Summary of the Invention

It has been found in large scale production of motors and pumps that the purpose and function of some seals is to keep one side of the seal free from any fuel, dirt and/or grime found on the other side. An example of such a seal is the seal on a motor shaft. The shaft extends beyond the frame of the motor to a pump. The shaft rotates and the lips of the seal must allow such rotation without reducing its sealing effectiveness.

Typically on a motor mounted to a hydraulic pump, protection must be designed into the motor to exclude any oil, especially brake fluid, flowing from the pump to the motor. Pumps can develop a leak while still generally operating satisfactorily. Hydraulic fluid can destroy a motor very quickly if the fluid comes in contact with the commutator and/or the brushes.

In such applications, both sides of the seal are substantially at the same pressure so that the pressure differential across the seal is either negligible or very small. Typically in the order of 7-103 kPa (1-15 psi) In addition, since such motors or pumps are produced on large capacity production lines, the assembly of the seal must be simple, efficient, inexpensive and easy to accomplish.

In order to solve the problem of having such an inexpensive, efficient seal there is disclosed herein a seal device for sealing a shaft extending through a frame and having a negligible to a small pressure difference across the seal device, the seal device having a central axis and comprising: a tubular housing member enclosed at one axial end and having means at the other axial end providing for associating the tubular housing member with a frame; the tubular walled housing member comprising a central aperture in the one axial end, the central aperture having a size that allows passage of such a shaft therethrough; a flexible elastomer washer member having a predetermined axial thickness and a predetermined outer periphery, the elastomer washer member comprising a central aperture having a diameter smaller than the diameter of such a shaft, the washer member being received inside the housing member; the housing member comprising a pocket surrounding the central aperture in the one axial end of the housing member for receiving the washer member; a resilient retaining member having an outer periphery which is nominally greater than the inner periphery of the wall of the tubular walled housing member and comprising a central aperture that has a diameter larger than the diameter of such a shaft; the outer periphery of the retaining member comprising a plurality of circumferentially spaced apart tang members, the retaining member retaining and sealing the elastomer washer member in the pocket and the tang members forming an interference fit with the inner periphery of the wall of the tubular walled housing member for securing and sealing the elastomer washer member in the housing member, while the central aperture of the washer member provides peripheral sealing to such a shaft extending therethrough; characterized in that: said pocket has an axial thickness slightly less than the axial thickness of said washer member and an outer periphery equal to or slightly larger than the outer periphery of said washer member.

### Description of the Drawings

Figure 1 is a plan view of a seal device by itself;
Figure 2 is a plan view of a resilient elastomer washer member of the seal device;
Figure 3 is a sectional view taken along line 3-3 in Figure 2;
Figure 4 is a sectional view taken along a diameter of a housing member of the seal device in Figure 1;
Figure 5 is a plan view of a resilient retaining member of the seal device;
Figure 6 is a sectional view taken along line 6-6 in Figure 5;
Figure 7 is a section view taken along line 7-7 in Figure 1, rotated 90°, and showing a shaft extending through the seal device; and
Figure 8 is a sectional view taken along a diameter of a prior art "lip" seal.

### Detailed Description of a Preferred Embodiment

Figure 8 illustrates a prior art "lip" seal device 10 having a metal shield 12, a soft elastomer member 14, and a coil, or garter, spring 16 holding a lip 18 on a shaft 20 at the point of seal. The mechanical stability and rigidity of lip seal device 10 is achieved typically by insert molding metal shield 12 into the device at the same time as elastomer member 14 is molded into its final shape. Metal shield 12 allows elastomer member 14 to be pressed into a housing 22 and remain there while sealing against fluid leaks around the outside of lip seal device 10 and between elastomer member 14 and shaft 20. The feature here and in most other prior art lip seal devices 10 is that they typically use a metal shield 12 of various configurations to mechanically stabilize seal device 10.

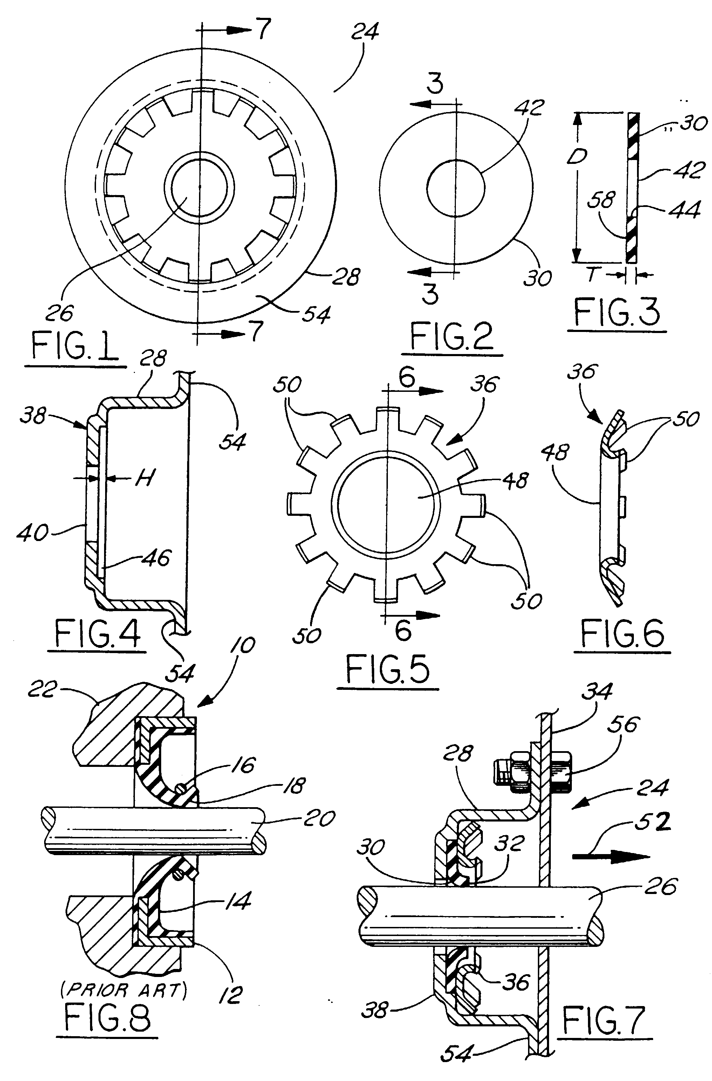

Figures 1 and 7 show a preferred embodiment of seal device 24 wherein a motor shaft 26 extends from a motor or similar device, not shown, through seal device 24, and into a pump or other external device, not shown. Shaft 26 is typically supported in a bearing, not shown, in either the external device or internally within the motor. The function of seal device 24, is to prevent any fluids in the external device, or other unwanted particles, from flowing into the motor. The mechanical stability of seal device 24 is in a tubular housing member 28, which is a separate part from a resilient elastomer washer member 30. In addition, seal device 24 of the present embodiment does not require a garter, or coil, spring 16 to secure the closure of a lip ring 32 about shaft 26.

In order to accomplish this, seal device 24 functions to seal shaft 26 extending through a motor frame 34 with either a negligible or a small pressure difference across seal device 24. In Figure 1, frame 34 is not shown for clarity. In the preferred embodiment, seal device 24 may be used in a motor and pump arrangement wherein the motor is on the left side of seal device 24 in Figure 7 and the pump is on the right side. Motor shaft 26 connects the pump and the motor. Seal device 24 comprises tubular housing member 28, flexible elastomer washer member 30, and a resilient retaining member 36.

As illustrated in Figure 4, tubular housing member 28 is enclosed at one end 38. Housing member 28 is normally an integral part of motor frame 34. Housing member 28 has a central aperture 40 in enclosed end 38. Central aperture 40 has a diameter that is larger than the diameter of shaft 26 which will extend through seal device 24.

Sealing is accomplished by flexible elastomer washer member 30 as shown by itself in Figures 2 and 3. Washer member 30 has a predetermined thickness "T" and outside diameter "D" for locating washer member 30 in housing member 28 as will hereinafter be described. Washer member 30 has a central aperture 42 with a diameter smaller than the diameter of shaft 26 that will extend through it. The inside diameter 44 of central aperture 42 will, when shaft 26 is extended therethrough, form lip ring 32 around the shaft thereby sealing the interface between the shaft and elastomer washer member 30. Since washer member 30 is fabricated from an elastomeric material, it will resiliently deform around shaft 26, and in addition the material is such that the shaft will be free to rotate in lip ring 32.

Housing member 28 has a pocket 46 surrounding central aperture 40, for receiving washer member 30. Pocket 46 is formed in many ways, one of which is by counterboring the surface around central aperture 40 to a predetermined depth "H". The depth "H" of pocket 46 is less than the thickness "T" of washer member 30, and the diameter of pocket 46 is approximately equal to, or slightly larger than, the outside diameter of washer member 30. This allows washer member 30 to locate in pocket 46 and protrude axially beyond the plane of the interior of end 38 of housing member 28. Of course, if washer member 30 has any perimeter shape other than that of a circle, the size of pocket 46 is approximately equal to or slightly larger than the perimeter of washer member 30 in order to accept it.

In order to secure washer member 30 in pocket 46 of housing member 28, resilient retaining member 36, illustrated in Figures 5 and 6, is used. Retaining member 36 has an outside diameter which is greater than the inside tubular diameter of housing member 28. Retaining member 36 has a central aperture 48 with a diameter larger than that of shaft 26 to allow the passage of the shaft therethrough.

A plurality of tang members 50 are spaced around the periphery of resilient retaining member 36. In the preferred embodiment, tang members 50 are of equal size and are equally spaced, although any other configuration may be used. The function of tang members 50 is to retain washer member 30 in pocket 46 of housing member 28. In order to accomplish this retention, tang members 50 form an interference fit with the inner tubular wall of housing member 28.

As illustrated in Figure 7, shaft 26 is inserted in washer member 30 in the direction of arrow 52. Because of the deformabililty of washer member 30, lip ring 32 is formed around the shaft. Lip ring 32 prevents the flow of fluid in the direction opposite arrow 52.

A method for assembling seal device 24 around shaft 26, which extends though frame member 34, as illustrated in Figure 7, comprises the steps of mounting tubular housing member 28 in frame member 34 by means of a mounting flange 54. The mounting may be accomplished by several different fastening means such as threaded fasteners 56 illustrated in Figure 7. Other means of fastening can include welding or riveting. In addition, housing member 28 may be formed by drawing the material from frame 34. It is relatively immaterial how the housing is made or secured to a frame or device.

Next flexible elastomer washer member 30 is located in pocket 46. Pocket 46 surrounds central aperture 40 in end 38 of the housing member and has depth "H" which is less than the thickness "T" of elastomer washer member 30 so that elastomer washer member 30 protrudes axially slightly beyond end 38 of housing member 28.

In order to secure and seal washer member 30 in housing member 28, retaining member 36, with a plurality of tang members 50 around its perimeter, is pressed against the inside tubular diameter of housing member 28. Tang members 50 are for retaining washer member 30 against the bottom of pocket 46. In addition, resilient retaining member 36 prevents washer member 30 from being pushed in the direction of arrow 52 in Figure 7. Tang members 50 form an interference fit with the inner wall of housing member 28 for securing elastomer washer member 30 in the housing member.

Shaft 26 is then extended through central aperture 40 in end 38 of housing member 28 in the direction of arrow 52 in Figure 7 and through washer member 30 in an interference fit relationship to shaft 26 forming lip ring 32 around the shaft. Lip ring 32 is formed by inside diameter 44 of washer member 30 spreading out along the perimeter of shaft 26. A broad inside surface 58 of washer member 30 seals against the bottom of pocket 46 via the force exerted by resilient retaining member 36.

Thus, seal device 24 of the present invention is simple, effective, and permits easy installation. In addition, because the several parts are few in number, actually two parts and a prepared location including pocket 46, seal device 24 is inexpensive to manufacture. As previously stated, the environment of seal device 24 is one in which the pressure differential across the seal device is small.

## Claims

1. A seal device (24) for sealing a shaft (26) extending through a frame , (34) and having a negligible to a small pressure difference across the seal device, the seal device (24) having a central axis and comprising:
a tubular housing member (28) enclosed at one axial end (38) and having means (54) at the other axial end providing for associating said tubular housing member (28) with such a frame;
said tubular walled housing member (28) comprising a central aperture (40) in said one axial end (38), said central aperture (40) having a size that allows passage of such a shaft (26) therethrough;
a flexible elastomer washer member (30) having a predetermined axial thickness (T) and a predetermined outer periphery (D), said elastomer washer member (30) comprising a central aperture (42) having a diameter smaller than the diameter of such a shaft, said washer member (30) being received inside said housing member (28);
said housing member (28) comprising a pocket (46) surrounding said central aperture (40) in said one axial end (38) of said housing member (28) for receiving said washer member (30);
a resilient retaining member (36) having an outer periphery which is nominally greater than the inner periphery of the wall of said tubular walled housing member (28) and comprising a central aperture (48) that has a diameter larger than the diameter of such a shaft (26);
said outer periphery of said retaining member (36) comprising a plurality of circumferentially spaced apart tang members (50), said retaining member (36) retaining and sealing said elastomer washer member 30 in said pocket (46), and said tang members (50) forming an interference fit with the inner periphery of the wall of said tubular walled housing member (28) for securing and sealing said elastomer washer member 30 in said housing member (28), while said central aperture (42) of said washer member (30) provides peripheral sealing to such a shaft (26) extending therethrough;
characterized in that:
said pocket (46) has an axial thickness (H) slightly less than the axial thickness (T) of said washer member (30) and an outer periphery equal to or slightly larger than the outer periphery (D) of said washer member (30).

2. A seal device according to claim 1 characterized further including such a frame (34) and wherein said tubular housing member (28) is an integral formation of said frame (34).

3. A seal device according to claim 2 characterized further in that said frame (34) is a motor housing.

4. A seal device according to claim 1 characterized further in that said means (54) at the other axial end of said tubular housing member (28) for associating said tubular housing member (28) to a frame comprises flange means (54) on said tubular housing member (28) adapted for fastening said tubular housing member (28) to such a frame (34).

5. A seal device according to claim 1 characterized further in that said predetermined outer periphery (D) of said washer member (30) is circular .

## Patentansprüche

1. Abdichtvorrichtung (24) zum Abdichten einer Welle (26), die durch einen Rahmen (34) verläuft und einen an der Abdichtvorrichtung anliegenden vernachlässigbaren bis kleinen Druckunterschied besitzt, wobei die Abdichtvorrichtung (24) eine zentrale Achse hat und folgende Merkmale aufweist:
ein rohrförmiges Gehäuseteil (28) ist am einen axialen Ende (38) verschlossen und besitzt am anderen axialen Ende Mittel (54) zum Verbinden des rohrförmigen Gehäuseteils (28) mit solch einem Rahmen;
das rohrförmige Gehäuseteil (28) weist eine zentrale Öffnung (40) in dem besagten einen axialen Ende (38) auf, wobei die zentrale Öffnung (40) eine ausreichende Größe für den Durchtritt solch einer Welle (26) besitzt;
ein flexibles elastomeres Dichtglied (30) hat eine vorgegebene axiale Dicke (T) und einen vorgegebenen äußeren Umfang (D), wobei das elastomere Dichtglied (30) eine zentrale Öffnung (42) mit einem Durchmesser aufweist, der kleiner als der Durchmesser solch einer Welle ist, wobei sich das Dichtglied (30) innerhalb des Gehäuseteils (28) befindet;
das Gehäuseteil (28) weist eine Tasche (46) auf, die die zentrale Öffnung (40) in dem besagten einen axialen Ende (38) des Gehäuseteils (28) zur Aufnahme des Dichtgliedes (30) umgibt;
ein elastisches Halteglied (36) hat einen äußeren Umfang, der nominell größer als der innere Umfang der Wand des rohrförmigen Gehäuseteils (28) ist, und weist eine zentrale Öffnung (48) auf, die einen Durchmesser hat, der größer als der Durchmesser solch einer Welle (26) ist:
der äußere Umfang des Haltegliedes (36) weist mehrere in Umfangsrichtung beabstandete Laschen (50) auf, wobei das Halteglied (36) das elastomere Dichtglied (30) in der Tasche (46) hält und abdichtet und die Laschen (50) einen Preßsitz mit dem inneren Umfang der Wand des rohrförmigen Gehäuseteils (28) bilden, um das elastomere Dichtglied (30) in dem Gehäuseteil (28) zu sichern und abzudichten, während die zentrale Öffnung (42) des Dichtgliedes (30) für eine Umfangsabdichtung solch einer hindurch verlaufenden Welle (26) sorgt;
dadurch gekennzeichnet, daß
die Tasche (46) eine axiale Dicke (H), die geringfügig kleiner als die axiale Dicke (T) des Dichtgliedes (30) ist, und einen äußeren Umfang hat. der gleich oder geringfügig größer als der äußere Umfang (D) des Dichtgliedes (30) ist.

2. Abdichtvorrichtung nach Anspruch 1, dadurch gekennzeichnet, daß sie ferner solch einen Rahmen (34) umfaßt und daß das rohrförmige Gehäuseteil (28) ein integraler Bestandteil des Rahmens (34) ist.

3. Abdichtvorrichtung nach Anspruch 2, dadurch gekennzeichnet, daß der Rahmen (34) ein Motorgehäuse ist.

4. Abdichtvorrichtung nach Anspruch 1, dadurch gekennzeichnet, daß die an dem anderen axialen Ende des rohrförmigen Gehäuseteils (28) vorgesehenen Mittel (54) zum Verbinden des rohrförmigen Gehäuseteils (28) mit einem Rahmen Flanschmittel (54) an dem rohrförmigen Gehäuseteil (28) aufweisen, die dazu dienen, das rohrförmige Gehäuseteil (28) an solch einem Rahmen (34) zu befestigen.

5. Abdichtvorrichtung nach Anspruch 1, dadurch gekennzeichnet, daß der vorgegebene äußere Umfang (D) des Dichtgliedes (30) kreisförmig ist.

## Revendications

1. Dispositif de joint (24) destiné à rendre étanche un arbre (26) s'étendant au travers d'une carcasse (34) et soumis à une différence de pression allant de négligeable à faible de part et d'autre du dispositif de joint, le dispositif de joint (24) ayant un axe central et comprenant:
un élément de logement tubulaire (28) fermé à une première extrémité axiale (38) et comportant un moyen (54) à l'autre extrémité axiale permettant d'associer ledit élément de logement tubulaire (28) à une telle carcasse,
ledit élément de logement à paroi tubulaire (28) comprenant une ouverture centrale (40) ménagée dans ladite première extrémité axiale (38), ladite ouverture centrale (40) présentant une taille qui permet le passage d'un tel arbre (26) au travers de celle-ci,
un élément de rondelle élastomère flexible (30) ayant une épaisseur axiale (T) prédéterminée et une périphérie extérieure (D) prédéterminée, ledit élément de rondelle élastomère (30) comprenant une ouverture centrale (42) ayant un diamètre inférieur au diamètre d'un tel arbre, ledit élément de rondelle (30) étant logé à l'intérieur dudit élément de logement (28),
ledit élément de logement (28) comprenant une poche (46) entourant ladite ouverture (40) de ladite première extrémité axiale (38) dudit élément de logement (28) afin de recevoir ledit élément de rondelle (30),
un élément élastique de maintien (36) présentant une périphérie extérieure qui est nominalement plus grande que la périphérie intérieure de la paroi dudit élément de logement à paroi tubulaire (28) et comprenant une ouverture centrale (48)qui présente un diamètre supérieur au diamètre d'un tel arbre (26),
ladite périphérie extérieure dudit élément de maintien (36) comprenant une pluralité d'éléments de tenons (50) espacés suivant la circonférence, ledit élément de maintien (36) maintenant ledit élément de rondelle élastomère (30) dans ladite poche (46) et le rendant étanche, et lesdits éléments de tenons (50) définissant un ajustement serré avec la périphérie intérieure de la paroi dudit élément de logement à paroi tubulaire (28) afin de fixer ledit élément de rondelle élastomère (30) dans ledit élément de logement (28) et de le rendre étanche, tandis que ladite ouverture centrale (42) dudit élément de rondelle (30) assure l'étanchéité périphérique d'un tel arbre (26) s'étendant au travers de celle-ci,
caractérisé en ce que:
ladite poche (46) présente une épaisseur axiale (H) qui est légèrement inférieure à l'épaisseur axiale (T) dudit élément de rondelle (30), et une périphérie extérieure qui est égale ou légèrement supérieure à la périphérie extérieure (D) dudit élément de rondelle (30).

2. Dispositif de joint selon la revendication 1, caractérisé en outre en ce qu'il comprend une telle carcasse (34) et dans lequel ledit élément de logement tubulaire (28) fait partie intégrante de ladite carcasse (34).

3. Dispositif de joint selon la revendication 2, caractérisé en outre en ce que ladite carcasse (34) est un carter de moteur.

4. Dispositif de joint selon la revendication 1, caractérisé en outre en ce que ledit moyen (54) situé à l'autre extrémité axiale dudit élément de logement tubulaire (28) destiné à associer ledit élément de logement tubulaire (28) à une carcasse, comprend un moyen de bride (54) sur ledit élément de logement tubulaire (28) conçu pour permettre de fixer ledit élément de logement tubulaire (28) sur une telle carcasse (34).

5. Dispositif de joint selon la revendication 1, caractérisé en outre en ce que ladite périphérie extérieure (D) prédéterminée dudit élément de rondelle (30) est circulaire.
